**Europäisches Patentamt**

**European Patent Office**

**Office européen des brevets**

(19)

(11) Veröffentlichungsnummer: **0 331 888 B1**

(12) # EUROPÄISCHE PATENTSCHRIFT

(45) Veröffentlichungstag der Patentschrift:
25.09.91 Patentblatt 91/39

(51) Int. Cl.⁵: **B60T 5/00**

(21) Anmeldenummer: **89101179.3**

(22) Anmeldetag: **24.01.89**

(54) Luftleitvorrichtung zum Kühlen von Radbremsen.

(30) Priorität: **05.03.88 DE 8802975 U**

(43) Veröffentlichungstag der Anmeldung:
**13.09.89 Patentblatt 89/37**

(45) Bekanntmachung des Hinweises auf die Patenterteilung:
**25.09.91 Patentblatt 91/39**

(84) Benannte Vertragsstaaten:
**DE ES FR GB IT NL SE**

(56) Entgegenhaltungen:
**DE-A- 3 107 692**
**DE-B- 2 830 450**
**GB-A- 2 074 265**
**US-A- 4 317 508**

(73) Patentinhaber: **Dr.Ing.h.c. F. Porsche Aktiengesellschaft**
**Porschestrasse 42**
**W-7000 Stuttgart 40 (DE)**

(72) Erfinder: **Mehlitz, Rainer, Dipl.-Ing.**
**Am Kalkwerk**
**W-3302 Cremlingen (DE)**

EP 0 331 888 B1

## Beschreibung

Die Erfindung bezieht sich auf eine Luftleitvorrichtung nach dem Oberbegriff des Anspruchs 1.

Aus der DE-OS 3525627 ist eine Luftleitvorrichtung für Radbremsen bekannt geworden, die an der Unterseite des Fahrzeugs einen kanalartigen Lufteinlaß, gebildet aus einem Luftleitprofil, einem Frontspoiler und einem Umlenkelement umfaßt. Dieses Element ist unmittelbar dem Rad zugeordnet am Lenker befestigt und nahe der Bremse vorgesehen und soll den ankommenden Luftstrom bzw. den Fahrtwind der Bremse zuleiten und somit eine Kühlung bewirken.

Aus der US-PS-4317508 ist ein profiliertes Umlenkelement einer Luftleitvorrichtung bekannt, das fahrzeugseitig am Lenker an eine vertikale Ebene befestigt ist und den Luftstrom kanalisiert durch Öffnungen der Bremsscheibe zuführt.

Aufgabe der Erfindung ist es, ein Umlenkelement, der im Oberbegriff dargestellten Gattung zu schaffen, das in einfacher Weise an einem Radführungslenker nahe der Bremse befestigbar ist.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß das Umlenkelement in einfacher Weise mit dem Lenker verbindbar ist. Hierzu sind an dem aus einem elastischen Material bestehenden Umlenkelement Abstellungen mit angeformt, die das Element lagegenau am Lenker halten. Diese Abstellung bildet zusammen mit der anschließenden rückseitigen Fläche des Elements am Anlagebereich des Lenkers eine Abstützbasis, so daß eine Verlagerung dieses Elements aufgrund der Luftkräfte nicht erfolgen kann und ein sicherer Halt gewährleistet ist.

Nach einer Ausführung der Erfindung mit einer Abstellung am Umlenkelement erfolgt die Befestigung am Lenker über Schrauben, die den Lenker vorzugsweise von oben durchdringen. Nach einer weiteren Ausführung mit zwei den Lenker von oben und unten übergreifenden Abstellungen, ist zur Festlegung am Lenker ein Bügel vorgesehen, der die Abstellung zwischen sich einschließt und mit dem Lenker über Schrauben verbindbar ist.

Diese Verbindungen des Umlenkelements mit dem Lenker sind so gestaltet, daß eine Montage, auch nachträglich, oder ein Auswechseln ohne wesentlichen Aufwand erfolgen kann.

Ausführungsbeispiele der Erfindung sind in der Zeichnung dargestellt und werden im folgenden näher beschrieben.

Es zeigen :

Fig. 1    Eine Draufsicht auf ein mit einem Radführungslenker befestigtes Umlenkelement mit einer Abstellung,

Fig. 2    das am Lenker gehaltene Umlenkelement im Schnitt nach der Linie II-II der Fig. 1,

Fig. 3    ein weiteres Ausführungsbeispiel eines am Lenker gehaltenen Umlenkelements mit zwei Abstellungen im Schnitt.

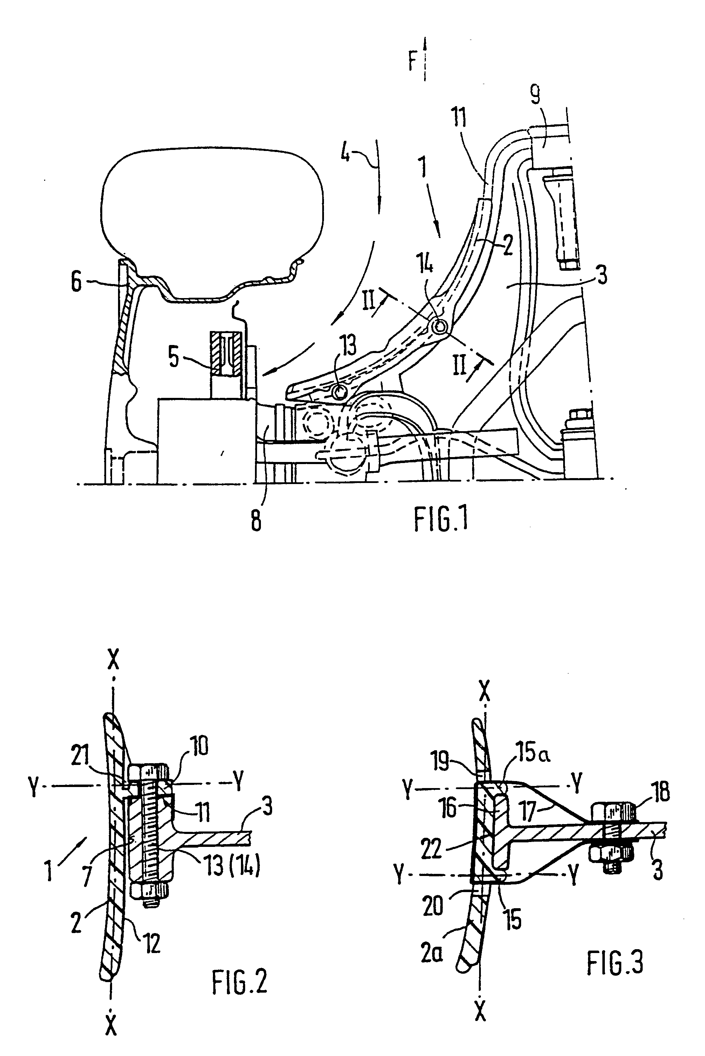

Die Luftleitvorrichtung 1 umfaßt im wesentlichen ein Umlenkelement 2, das mit einem Radführungslenker 3 verbunden und so im Luftstrom angestellt ist, daß der ankommende Luftstrom 4 zu einer in der Felge 6 angeordneten Bremse 5 umgelenkt wird, wie die Pfeile in Fig. 1 näher zeigen.

Das Umlenkelement 2 ist — in bezug auf die Fahrtrichtung F — an der Vorderfläche 7 des Lenkers 3 angeordnet. Es ist in einer etwa vertikalen Ebene X-X ausgerichtet und erstreckt sich entlang der bogenförmig ausgebildeten Kante des Lenkers 3 in einer etwa horizontalen Ebene Y-Y etwa vom Radträger 8 bis annähernd zu einem vorderen Lenkerlager 9.

Nach einer ersten Ausführung des Umlenkelements 2, gemäß den Fig. 1 und 2, weist es eine Abstellung 10 auf, die in einer horizontalen Ebene Y-Y verläuft und sich an einer korrespondierenden Lenkerfläche 11 abstützt. Vorzugsweise erstreckt sich die Abstellung 10 über die gesamte Länge des Umlenkelements 2, obwohl es auch möglich ist, daß mehrere Abstellungen vorgesehen sind. Insbesondere sind diese Abstellungen dann an den Befestigungsorten mit dem Lenker 3 angeordnet.

Die Abstellung 10 bildet mit einer Rückfläche 12, die der Lenkerfläche 11 gegenübersteht, eine rechtwinklige Anlagefläche zum Lenker 3.

Eine Befestigung des Umlenkelements 2 mit dem Lenker 3 erfolgt über im Abstand angeordnete Befestigungsschrauben 13, 14, die die Abstellung 10 sowie den Lenker 3 durchdringen und an diesem gekontert werden. Gegen ein Ausreißen der Aufnahmebohrung für die Befestigungsschrauben 13, 14 ist in der Bohrung jeweils eine Blechhülse 21 vorgesehen, die in der Abstellung 10 verkrallt ist.

Nach einer weiteren Ausführung der Erfindung, gemäß Fig. 3, sind am Umlenkelement 2a zwei den Randbereich des Lenkers 3 umgreifende Abstellungen 15a und 15 vorgesehen. Diese erstrecken sich jeweils in horizontalen Ebenen Y-Y und übergreifen den Lenker 3 von oben und unten und bilden eine im Querschnitt

2

U-förmige Aufnahme 22, in der ein Steg 16 des Lenkers 3 gehalten wird.

Zur Festlegung des Umlenkelements 2a am Lenker 3 sind Bügel 17 vorgesehen, die die Abstellungen 15a, 15 — in bezug auf die Fahrtrichtung F — von vorn übergreifen und endseitig mit dem Lenker 3 über Schrauben 18 befestigbar sind. Das Umlenkelement 2a weist zur Durchführung des Bügels 17 zwei Durchstecköffnungen 19 und 20 auf, die unmittelbar oberhalb der Abstellung 14 und unterhalb der weiteren Abstellung 15 im Umlenkelement 2a eingelassen sind.

Es sind vorzugsweise mehrere solcher Bügel 17 zum Halten des Umlenkelements 2 am Lenker 3 befestigt, wobei die beiden Abstellungen 14, 15 sich vorzugsweise über die gesamte Länge des Umlenkelements 2 erstrecken.

## Patentansprüche

1. Luftleitvorrichtung zum Kühlen von Radbremsen eines Kraftfahrzeugs mit einem entgegen dem ankommenden Luftstrom angestellten profilierten Umlenkelement (2, 2a), das fahrzeugseitig am Radlenker (3) gehalten und den Luftstrom (4) der Bremse (5) zuleitend angeordnet ist und das Umlenkelement (2, 2a) am Radlenker (3) lagegenau abgestützt und durch Befestigungselemente (13, 14 ; 18) mit diesem verbunden ist, dadurch gekennzeichnet, daß das Umlenkelement (2) über eine Abstellung (10), die den Lenker (3) von oben übergreift und mit einer Rückfläche (12) des Umlenkelements (2) eine rechtwinklige Anlage zum Lenker (3) bildet, gehalten wird.

2. Vorrichtung nach Anspruch 1, dadurch gekennzeichnet, daß in der Abstellung (10) im Abstand zueinander angeordnete den Lenker (3) durchdringende Befestigungsschrauben (13, 14) angeordnet sind.

3. Vorrichtung nach Anspruch 2, dadurch gekennzeichnet, daß in den Aufnahmebohrungen der Abstellung (10) für die Befestigungsschrauben (13, 14) jeweils eine Blechhülse (21) angeordnet und in der Abstellung (10) verkrallt ist.

4. Luftleitvorrichtung zum Kühlen von Radbremsen eines Kraftfahrzeugs mit einem entgegen dem ankommenden Luftstrom angestellten profilierten Umlenkelement (2, 2a), das fahrzeugseitig am Radlenker (3) gehalten und den Luftstrom (4) der Bremse (5) zuleitend angeordnet ist und das Umlenkelement (2, 2a) am Radlenker (3) lagegenau abgestützt und durch Befestigungselemente (13, 14 ; 18) mit diesem verbunden ist, dadurch gekennzeichnet, daß das Umlenkelement (2a) über zwei Abstellungen (15, 15a) die den Lenker (3) von oben und unten übergreifen und im Querschnitt eine U-förmige Aufnahme (22) bilden, am Lenker (3) gehalten ist.

5. Vorrichtung nach Anspruch 4, dadurch gekennzeichnet, daß die U-förmige Aufnahme (22) von einem Bügel (17) umschlossen ist, der endseitig über Befestigungsschrauben (18) mit dem Lenker (3) verbindbar ist.

6. Vorrichtung nach den Ansprüchen 4 oder 5, dadurch gekennzeichnet, daß das Umlenkelement (2a) im Bereich der U-förmigen Aufnahme (22) Durchstecköffnungen (19, 20) für den Bügel (17) aufweist, der die Abstellungen sowie den Bereich zwischen den Abstellungen formschlüssig umgreift.

## Claims

1. A spoiler device for cooling wheel brakes of a motor vehicle, having a profiled deflexion member (2, 2a) set contrary to the oncoming air flow and held on the wheel guide rod (3) on the side of the vehicle and arranged guiding the air flow (4) towards the brake (5), and the deflexion member (2, 2a) is supported precisely in position on the wheel guide rod (3) and is connected thereto by fastening members (13, 14 ; 18), characterized in that the deflexion member (2) is held by way of a projection (10) engaging over the wheel guide rod (3) from above and forming with a rear face (12) of the deflexion member (2) a right-angled abutment to the wheel guide rod (3).

2. A device according to Claim 1, characterized in that fastening screws (13, 14) arranged at a distance from one another and passing through the guide rod (3) are arranged in the projection (10).

3. A device according to Claim 2, characterized in that a sheet-metal sleeve (21) is arranged in each case in the receiving bores of the projection (10) for the fastening screws (13, 14) and is clipped into the projection (10).

4. A spoiler device for cooling wheel brakes of a motor vehicle, having a profiled deflexion member (2, 2a) set contrary to the oncoming air flow and held on the wheel guide rod (3) on the side of the vehicle and arranged guiding the air flow (4) towards the brake (5), and the deflexion member (2, 2a) is supported precisely in position on the wheel guide rod (3) and is connected thereto by fastening members (13, 14 ; 18), characterized in that the deflexion member (2a) is held on the wheel guide rod (3) by way of two projections (15, 15a) engaging over the wheel guide rod (3) from above and below and forming a U-shaped receiving means (22) in cross-section.

EP 0 331 888 B1

5. A device according to CLaim 4, characterized in that the U-shaped receiving means (22) is surrounded by a yoke (17) which connectable to the guide rod (3) at the end by way of fastening screws (18).

6. A device according to Claim 4 or 5, characterized in that in the region of the U-shaped receiving means (22) the deflexion member (2a) has through openings (19, 20) for the yoke which engages with positive locking around the projections and the region between the projections.


## Revendications

1. Dispositif de guidage d'air pour le refroidissement des freins de roue d'un véhicule automobile comportant un élément de déviation (2, 2a) profilé, placé à l'encontre du courant d'air arrivant, lequel élément de déviation est maintenu, côté véhicule, contre le bras de roue (3) et est disposé de manière à envoyer le courant d'air (4) vers le frein (5) et l'élément de déviation (2, 2a), positionné avec précision, prend appui contre le bras de roue (3) et est relié à celui-ci par des éléments de fixation (13, 14 ; 18), caractérisé en ce que l'élément de déviation (2) est maintenu par l'intermédiaire d'un dispositif d'arrêt (10) qui passe du dessus sur le bras (3) et par une face arrière (12) de l'élément de déviation (2), forme une butée à angle droit pour le bras (3).

2. Dispositif selon la revendication 1, caractérisé en ce que des vis de fixation (13, 14), espacées l'une de l'autre, traversant le bras (3), sont placées dans le dispositif d'arrêt (10).

3. Dispositif selon la revendication 2, caractérisé en ce qu'une douille en tôle (21) est placée dans les trous de logement des vis de fixation (13, 14), pratiqués dans le dispositif d'arrêt (10) et est accrochée dans le dispositif d'arrêt (10).

4. Dispositif de guidage d'air pour le refroidissement des freins de roue d'un véhicule automobile comportant un élément de déviation (2, 2a) profilé, placé à l'encontre du courant d'air arrivant, lequel élément de déviation est maintenu, côté véhicule, contre le bras de roue (3) et est disposé de manière à envoyer le courant d'air (4) vers le frein (5) et l'élément de déviation (2, 2a), positionné avec précision, prend appui contre le bras de roue (3) et est relié à celui-ci par des éléments de fixation (13, 14 ; 18), caractérisé en ce que l'élément de déviation (2a) est maintenu contre le bras (3), par deux dispositifs d'arrêt (15, 15a) qui passent du dessus et du dessous sur le bras (3) et forment un logement (22) de section transversale en U.

5. Dispositif selon la revendication 4, caractérisé en ce que le logement (22) en U est entouré par un étrier (17) qui peut être relié aux extrémités avec le bras (3), par des vis de fixation (18).

6. Dispositif selon les revendications 4 ou 5, caractérisé en ce que l'élément de déviation (2a) présente, dans la région du logement en U (22), des ouvertures débouchantes (19, 20) pour l'étrier (17) qui entourent, par concordance de forme, les dispositifs d'arrêt ainsi que la région comprise entre ceux-ci.

4

FIG.1

FIG.2

FIG.3